Europäisches Patentamt

European Patent Office

Office européen des brevets

(19)

(11) EP 0 699 011 A2

(12) EUROPÄISCHE PATENTANMELDUNG

(43) Veröffentlichungstag:
28.02.1996 Patentblatt 1996/09

(51) Int. Cl.⁶: H04Q 7/38, H04B 7/26

(21) Anmeldenummer: 95112667.1

(22) Anmeldetag: 11.08.1995

(84) Benannte Vertragsstaaten:
BE DE ES FR GB IT NL SE

(30) Priorität: 27.08.1994 DE 4430553

(71) Anmelder:
• Alcatel SEL Aktiengesellschaft
D-70435 Stuttgart (DE)
Benannte Vertragsstaaten:
DE ES FR GB IT SE

• ALCATEL N.V.
NL-2288 BH Rijswijk (NL)
Benannte Vertragsstaaten:
BE NL

(72) Erfinder:
• Hofbauer, Klaus
D-71263 Weil der Stadt (DE)
• Cadus, Bernd
D-73105 Dürnau (DE)

(74) Vertreter: Schätzle, Albin, Dipl.-Phys. et al
D-70449 Stuttgart (DE)

(54) Mobilfunksystem und Übergabeverfahren eines ortsbeweglichen Teilnehmers

(57) In einem zellularen Funksystem, in dem sich ortsbewegliche Teilnehmer mit einer hohen Geschwindigkeit bewegen können, besteht die Gefahr, daß Gesprächsverbindungen während einer an der Zellgrenze notwendig werdenden Übergabeprozedur unterbrochen werden.

Bei dem erfindungsgemäßen zellularen Funksystem, das z.B. beim Streckenfunk für schienengebundenen Verkehr Anwendung findet, in dem sich der ortsbewegliche Teilnehmer (MS) von einer Verkehrszelle (ZI) in Richtung einer Zielzelle (Z2) bewegt, wird die Übergabeprozedur von der Zielzelle (Z2) dann eingeleitet und ausgeführt, wenn von der Funkfeststation (BTS2) der Zielzelle (Z2) gemessene Empfangsparameter festgelegte Mindestwerte erreichen.

FIG.2

EP 0 699 011 A2

**Beschreibung**

Die Erfindung betrifft ein zellulares Funksystem gemäß dem Oberbegriff des Anspruchs 1. Außerdem betrifft die Erfindung ein Übergabeverfahren einer Funkverbindung eines ortsbeweglichen Teilnehmers gemäß dem Oberbegriff des Anspruchs 6 für ein zellulares Funksystem gemäß dem Oberbegriff des Anspruchs 1.

Ein zellulares Funksystem ist z.B. aus dem Buch von Mouly, M. et al, "The GSM System for Mobile Communications", Eigenverlag 1992, (ISBN 2-9507190-0-7) bekannt, vor allem aus Kapitel 2.1. Dort sind einzelne Systemkomponenten und deren Funktionen ausführlich erläutert. Dazu gehören u.a. eine Mobilstation, eine Funkfeststation, die auch als Basisstation bezeichnet wird (engl.: Base Transceiver Station, BTS), eine Funkfeststationsteuereinrichtung (engl.: Base Station Controller, BSC) und eine Mobilfunkvermittlungseinrichtung (engl.: Mobile services Switching Centre, MSC).

Zwischen der Mobilstation und einer momentan für diese Mobilstation zuständigen Funkfeststation findet die Sprach- oder Datenübertragung im Zeitteilungszugriffsverfahren (TDMA-Verfahren) statt, bei dem es für eine einer Übertragungsrichtung zugeordneten Trägerfrequenz einen Rahmen mit acht Zeitschlitzen gibt. Jeder Zeitschlitz stellt einen Kanal dar, in dem z.B. Sprache übertragen wird. Innerhalb einer Zelle wird die Sprache mit einem für die Funkverbindung festgelegten Trägerfrequenzpaar übertragen. Von der Mobilstation zur Funkfeststation wird die Sprache mit einer ersten Trägerfrequenz übertragen und in umgekehrter Richtung wird die Sprache mit einer zweiten Trägerfrequenz übertragen. Diese beiden Trägerfrequenzen stellen das Trägerfrequenzpaar dar.

Bei einem Rahmen mit acht Zeitschlitzen können acht Gespräche von acht Mobilstationen mit diesem Trägerfrequenzpaar übertragen werden. Wollen mehr als acht Teilnehmer sprechen, ist es möglich, dieser Zelle mehrere Trägerfrequenzpaare zuzuordnen. Die Funkfeststationen können in diesem Fall auf mehreren Trägerfrequenzen senden und auf mehrere Trägerfrequenzen empfangen.

Es gibt zur Zeit Überlegungen, nach dem GSM-Standard arbeitende zellulare Funksysteme auf den Streckenfunk für schienengebundenen Verkehr (Eisenbahn) zu übertragen. Einen Überblick über Streckenfunksysteme gibt Francois de Roulet, in "Streckenfunk: Europas unterschiedliche Systeme", ascom Technische Mitteilungen, 3/4, 1991, Seiten 33 bis 37.

Mit dem Streckenfunk wird eine Sprach- und Datenverbindung zwischen dem fahrenden Zug und den Bahnhöfen sowie den zentralen Leitstellen ermöglicht. Er dient somit der Lenkung des Zugverkehrs. Zunehmend wird der Streckenfunk auch als Datennetzwerk zwischen einem Rechner im Zug und dem der Leitstelle benutzt.

In einem Streckenfunksystem sind u.a. mindestens eine Mobilstation (ortsbeweglicher Teilnehmer) und mehrere Basisstationen (Funkfeststation) vorhanden. Die Mobilstation, die im Triebwagen eingebaut ist, besteht aus einem Sender/Empfänger mit Steuerlogik und bis zu zwei Bediengeräten. Bei modernen Zügen wird die Mobilstation mit einem Bordrechner verbunden, wobei mehrere Schnittstellen für Daten- und Sprachendgeräte vorgesehen sind.

Die Basisstationen entlang der Bahnlinie bilden einen Teil der Infrastruktur; sie garantieren eine optimale Funkversorgung der Züge.

In der genannten Veröffentlichung (Roulet) ist außerdem erwähnt, daß die Anwendung der GSM-Struktur auf das Bahnfunknetz geplant ist, was nicht unproblematisch ist, da GSM nicht für Geschwindigkeiten von 250 km/h und mehr ausgelegt ist.

Wechselt eine Mobilstation z.B. während einer Gesprächsverbindung in einem zellularen Funksystem von einer Zelle in eine benachbarte Zelle, muß die Gesprächsverbindung an die Basisstation der benachbarten Zelle übergeben werden. Eine solche Übergabeprozedur ist auch als Handover bekannt. Bei hohen Geschwindigkeiten (s.o.) besteht die Gefahr, daß die Gesprächsverbindung während der Übergabeprozedur unterbrochen wird.

Übergabeprozeduren sind bekannt, z.B. aus dem obengenannten Buch (Mouly, M.), vor allem Kapitel 6.1.4 und 6.3.4. Dort ist die Übergabeprozedur (Handover) für das GSM System beschrieben, für die es folgende Fälle gibt:

- Intra-BSC Handover, ein Handover zwischen zwei Basisstationen (BTS), die von einer Funkfeststationsteuereinrichtung (BSC) versorgt werden,

- Inter-BSS Handover (Intra-MSC Handover), ein Handover zwischen zwei Basisstationen (BTS), die von zwei unterschiedlichen Funkfeststationsteuereinrichtungen (BSC) innerhalb einer Mobilfunkvermittlungseinrichtung (MSC) gesteuert werden,

- Inter-MSC Handover, ein Handover zwischen zwei Basisstationen (BTS), die zu unterschiedlichen Mobilfunkvermittlungseinrichtungen (MSC) gehören.

Die Entscheidung, eine Übergabeprozedur einzuleiten, wird in einem System gemäß dem GSM-Standard von der Funkfeststationsteuereinrichtung (BSC) getroffen. Der Ablauf der Übergabe läßt sich in zwei Phasen einteilen: In der ersten Phase leitet die Funkfeststationsteuereinrichtung (BSC), die momentan für die Mobilstation zuständig ist, Maßnahmen zur Bereitstellung des zukünftigen Kommunikationsweges ein. Diese Phase wird dadurch beendet, daß die an diese Funkfeststationsteuereinrichtung (BSC) angeschlossene Basisstation (BTS) einen Übergabebefehl (Handover Command) zur Mobilstation (MS) sendet.

In der zweiten Phase greift die Mobilstation (MS) auf den neuen zugeteilten Kanal zu. Dadurch wird der zukünftige Kommunikationsweg geschaltet und der bisherige Weg aufgegeben. D.h. bei einem Inter-BSS Handover wird in der Funkfeststationsteuereinrichtung (BSC) auf eine neue an sie angeschlossene Basisstation (BTS) umgeschaltet. Ein Verfahren zur Übergabe einer Funkverbindung in einer Funknetzstruktur, die speziell auf die Versorgung linienförmiger Verkehrswege mit oder ohne Kreuzungen ausgelegt ist, ist aus DE-A1-42 25 582 bekannt.

Daraus ist ein "weiches" Handover bekannt, bei dem die Sendeleistungen der Funkfeststationen adaptiv aufgrund von durch die Mobilstation gemessenen Empfangspegel geregelt wird.

Der Erfindung liegt die Aufgabe zugrunde, ein zellulares Funksystem und ein Verfahren zur Übergabe einer Funkverbindung anzugeben, bei denen sich sehr schnell bewegende Teilnehmer übergeben werden können, ohne daß die Funkverbindung unterbrochen wird, und ohne daß die Sendeleistungen der Funkfeststationen adaptiv geregelt werden. Ein die Aufgabe lösendes zellulares Funksystem ist Gegenstand des Patentanspruchs 1 und ein die Aufgabe lösendes Verfahren zur Übergabe ist Gegenstand des Patentanspruchs 8.

Vorteilhafte Ausgestaltungen der Erfindung sind in den Unteransprüchen angegeben.

Ein Vorteil der Erfindung ist, daß mehrere Gespräche oder Datenverbindungen, z.B. acht Gesprächsverbindungen, gleichzeitig übergeben werden können. Ein weiterer Vorteil der Erfindung ist, daß ein Überlappen der Zellen nicht zwingend erforderlich ist.

Da es, wie bereits erwähnt, Bestrebungen gibt, nach dem GSM-Standard arbeitende Streckenfunksysteme zu schaffen, ist es Ziel der Erfindung, Lösungen der genannten Aufgaben anzugeben, die sich weitgehend an diesem Standard orientieren. Im Standard festgelegte Anweisungen und Prozeduren werden in der Beschreibung durch Großbuchstaben kenntlich gemacht. Für detailliertere Betrachtungen dieser Anweisungen und Prozeduren wird auf den Standard verwiesen (z.B. Buch von Mouly et al).

Die Erfindung wird im folgenden beispielhaft anhand von Figuren näher erläutert. Es zeigen:

Fig.1    schematisch einen Teil eines zellularen Funksystems, und

Fig.2    eine Darstellung des Verfahrens zur Übergabe einer Funkverbindung als Folge von aufeinanderfolgenden Zuständen und Schritten.

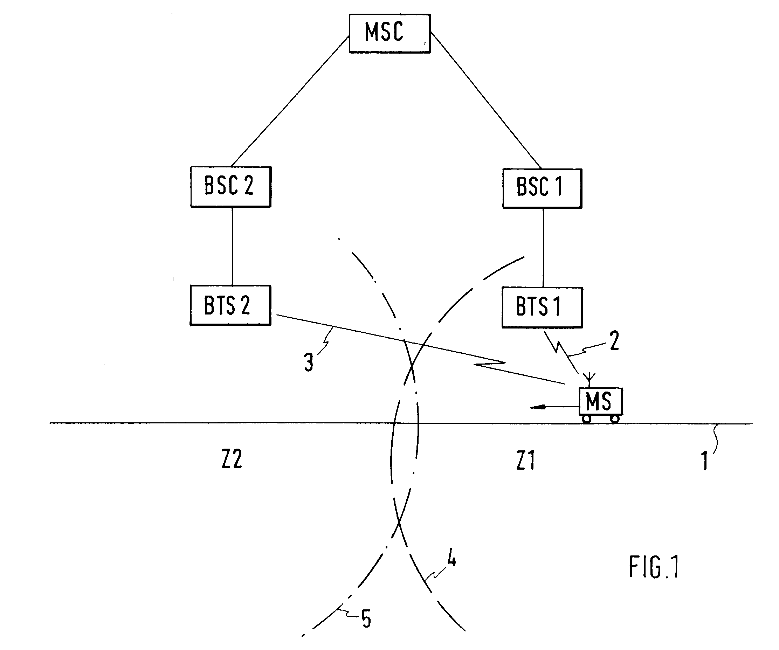

In Fig.1 ist schematisch ein Teil eines zellularen Funksystems gezeigt, in dem sich ein ortsbeweglicher Teilnehmer von einer Zelle Z1 entlang einer festgelegten Strecke 1 auf eine Zelle Z2 zubewegt. Die Zelle Z1 wird im folgenden "Verkehrszelle" genannt, weil die Beschreibung des Verfahrens zur Übergabe von dem Zustand ausgeht, daß der ortsbewegliche Teilnehmer mit dieser Zelle in Nachrichtenverbindung steht. Die Zelle Z2 wird im folgenden "Zielzelle" genannt, weil sich der ortsbewegliche Teilnehmer auf diese Zelle zubewegt. Die Bewegungsrichtung des ortsbeweglichen Teilnehmers ist durch einen Pfeil angedeutet. Der ortsbewegliche Teilnehmer ist z.B. ein Hochgeschwindigkeitszug, in dessen Triebwagen sich eine Mobilstation MS befindet, an die mehrere Endgeräte angeschlossen sind. Der ortsbewegliche Teilnehmer wird im folgenden als Mobilstation MS bezeichnet. Die gezeigte Zellenstruktur ist nur als Beispiel zu verstehen: Die Zellen können überlappend, berührend und/oder durch einen Freiraum getrennt sein.

In Fig.1 überlappen sich die Verkehrszelle Z1 und die Zielzelle Z2, was durch zwei Zellgrenzen 4, 5 angedeutet ist, durch die die Strecke 1 führt. Jede Zelle wird von einer Funkfeststation, im folgenden Basisstation BTS genannt, versorgt. Die Verkehrszelle Z1 wird durch die erste Basisstation BTS1 versorgt und die Zielzelle Z2 durch die zweite Basisstation BTS2. Jede Basisstation wird durch eine Funkfeststationsteuereinrichtung BSC1, BSC2 gesteuert. Die Funkfeststationsteuereinrichtungen BSC1, BSC2 sind an eine gemeinsame Mobilfunkvermittlungseinrichtung MSC angeschlossen. Basisstation und Funkfeststationsteuereinrichtung sind hier räumlich getrennt gezeichnet. Sie können auch als eine Einheit ausgeführt sein. Für die Erfindung ist dies nicht relevant.

Die Verkehrszelle Z1 ist die Zelle, deren Funkfeststation BTS1 die Mobilstation MS momentan zugeordnet ist, d.h. zwischen der Mobilstation MS und der Basisstation BTS1 der Verkehrszelle Z1 besteht z.B. eine Gesprächsverbindung, wenn der Zugführer mit der Leitstelle im Bahnhof spricht. Dafür ist ein Zeitschlitz (Kanal) eines TDMA-Rahmens vorgesehen. Hat der Rahmen acht (sechzehn) Kanäle, können gleichzeitig acht (sechzehn) Gesprächs- oder Datenverbindungen bestehen. Diese maximal acht (sechzehn) Verbindungen werden im folgenden als eine Funkverbindung 2 bezeichnet. Die Angaben in den Klammern beziehen sich auf sogenannte Halbratenkanäle.

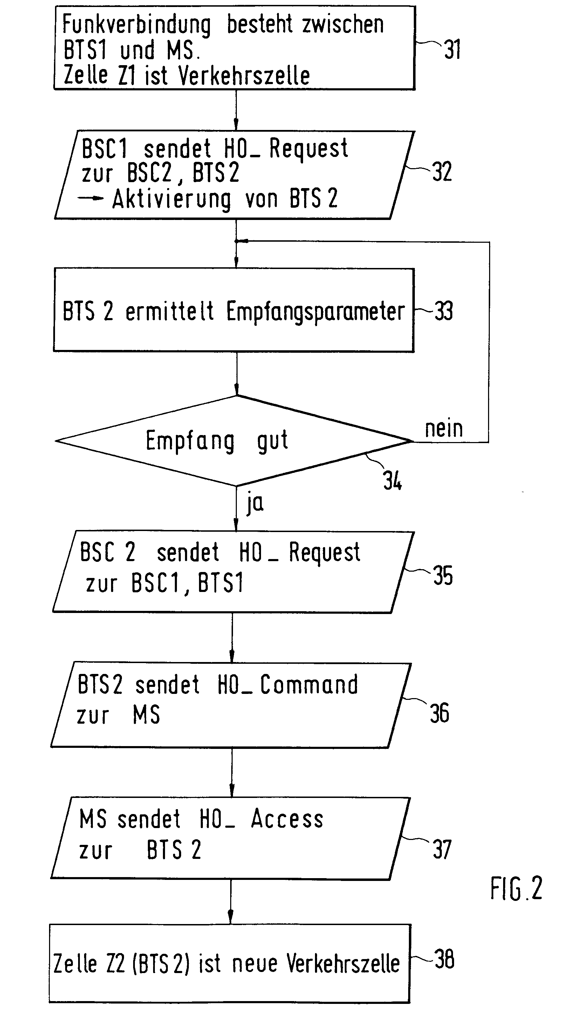

Auf eine ebenfalls eingezeichnete Signalisierungsverbindung 3 wird in Zusammenhang mit einem Verfahren zur Übergabe der Funkverbindung 2 eingegangen (Fig.2).

In dem zellularen Funksystem haben mindestens die Basisstation BTS1 der Verkehrszelle Z1 und die Basisstation BTS2 der Zielzelle Z2 einen gemeinsamen Takt, und jede Basisstation BTS sendet und empfängt auf mindestens zwei Frequenzen (Trägerfrequenzen). Eine dieser Frequenzen ist für alle Basisstationen BTS1, BTS2 gleich.

Im GSM-Standard ist ein Signalisierungskanal festgelegt, der allgemeine Nutzinformation für die Mobilstation beinhaltet. Zu einer solchen Information gehört z.B. die Angabe, zu welchem Netzwerk eine besuchte Zelle gehört. Dieser Kanal ist dort als Broadcast Control Channel (BCCH) bezeichnet. Im zellularen Funksystem haben benachbarte Zellen für diesen Kanal unterschiedliche Trägerfrequenzen. Es gibt also in dem zellularen Funksystem der Erfindung mindestens zwei Trägerfrequenzen für jede Basisstation, auf denen diese sendet: Eine, die für alle Basisstationen gleich ist, und eine für den Signalisierungskanal (BCCH).

Das Verfahren zur Übergabe der Funkverbindung 2 wird im folgenden anhand von Fig.2 erklärt.

In Fig. 2 ist das Verfahren zur Übergabe der Funkverbindung 2 als Folge von aufeinanderfolgenden Zuständen und Schritten 31 bis 38 dargestellt. Ausgangszustand 31 ist, daß die Mobilstation MS eine Funkverbindung 2 mit der Basisstation BTS1 der Verkehrszelle Z1 hat. Während dieser Funkverbindung 2 bestimmt die Mobilstation MS ständig Empfangsparameter der von der Basisstation BTS1 der Verkehrszelle Z1 gesendeten Funksignale. Die Funksignale sind hier z.B. Gesprächsignale. Zu den Empfangsparametern gehören z.B. Empfangsfeldstärke (RXLEV) und Empfangsqualität (RXQUAL). Außerdem bestimmt die Mobilstation MS die Empfangsparameter der von benachbarten Basisstationen gesendeten Funksignale, die Signalisierungssignale (BCCH) sind. Die von der Mobilstation MS bestimmten Empfangsparameter sendet die Mobilstation MS zur momentan für sie zuständigen Basisstation BTS1 der Verkehrszelle Z1. Die bisher erfolgte Beschreibung des Ausgangszustands 31, entspricht der eines Funksystems gemäß dem GSM Standard.

Die Funkfeststationsteuereinrichtung BSC1 des zellularen Funksystems gemäß der Erfindung kann in Verbindung mit der Basisstation BTS1 der Zielzelle Z1 die Bewegungsrichtung der Mobilstation MS bestimmen: Werden z.B. die Empfangsparameter der von der Basisstation BTS1 der Verkehrszelle Z1 gesendeten Funksignale schlechter, bewegt sich die Mobilstation MS von der Basisstation BTS1 der Verkehrszelle Z1 fort. Nimmt gleichzeitig ein Empfangsparameter eines von einer benachbarten Basisstation gesendeten Funksignals (BCCH) zu, kann eindeutig die Bewegungsrichtung bestimmt werden.

Da dadurch die Zielzelle Z2 bekannt ist, kann die Basisstation BTS2 der Zielzelle Z2 durch die Funkfeststationsteuereinrichtung BSC1 der Verkehrszelle Z1 frühzeitig aktiviert werden. Das Aktivieren der Basisstation BTS2 der Zielzelle Z2 geschieht in einem ersten Schritt 32: Die Funkfeststation BSC1 der Verkehrszelle Z1 sendet (über die Mobilfunkvermittlungseinrichtung MSC geführte Verbindungsleitungen), eine Übergabeanforderung (HANDOVER-REQUEST) zur Basisstation BTS2 der Zielzelle 2.

Für die Basisstation BTS2 der Zielzelle Z2 bedeutet der Empfang dieser Anforderung, daß sich eine Mobilstation MS auf sie zubewegt und daß in Kürze eine Übergabe einer Funkverbindung notwendig wird.

Die so aktivierte Basisstation BTS2 der Zielzelle Z2 kann daraufhin vorbereitende Maßnahmen für die Übergabe und die zukünftige Funkverbindung einleiten, d.h. sie stellt Ressourcen zur Verfügung. Darunter ist die Bereitstellung von Funkkanälen und deren Synchronisation mit den Kanälen der BTS1 der Verkehrszelle Z1 zu verstehen. Ein Zeitversatz T (T = (Laufzeit (BTS2-MS)-(Laufzeit (BTS1-MS) ), bezogen auf die Synchronisationsregelung der Basisstation BTS2 der Zielzelle Z2, muß gegebenenfalls über eine sogenannte Schutzzeit (GUARDTIME) hinaus, geregelt werden.

In einem zweiten Schritt 33 ermittelt die aktivierte Basisstation BTS2 der Zielzelle Z2 Empfangsparameter des von der Mobilstation MS ausgesendeten Funksignals: Sie mißt z.B. Empfangsfeldstärke (RXLEV) und Empfangsqualität (RXQUAL) des ausgesendeten Funksignals (Gesprächssignal).

Während die Funkverbindung 2 zwischen der Mobilstation MS und der Basisstation BTS1 der Verkehrszelle Z1 besteht, kennt die Basisstation BTS2 und die Funkfeststationsteuereinrichtung BSC2 der Zielzelle Z2 die Empfangsparameter, die eine Funkverbindung zwischen der Basisstation BTS2 der Zielzelle Z2 und der Mobilstation MS momentan hätte. Wie im folgenden noch erläutert wird, ist die Kenntnis der Empfangsparameter eine Voraussetzung für den Zeitpunkt der Einleitung der Übergabe.

Eine Sendeeinrichtung der Basisstation BTS2 der Zielzelle Z2 ist während dieser Zeit inaktiv, da es sonst zu Interferenzen kommen würde (DTX).

In einem dritten Schritt 34, einem Vergleicherschritt, werden die gemessenen Empfangsparameter mit festgelegten Mindestwerten verglichen (RXLEV-MIN, RXQUAL-MIN). Sind die Empfangsparamter größer als diese Mindestwerte, schließt sich ein vierter Schritt 35 an. Andernfalls wird der dritte Schritt 33 so lange wiederholt, bis die Bedingung erfüllt ist.

In diesem vierten Schritt 35 sendet die Funkfeststationsteuereinrichtung BSC2 der Zielzelle Z2 eine Übergabeanforderung (HANDOVER-REQUEST) zur Funkfeststationsteuereinrichtung BSC1, und damit auch zur Basisstation BTS1 der Verkehrszelle Z1. Die Übergabeanforderung wird über die Mobilfunkvermittlungseinrichtung MSC zur Verkehrszelle Z1 übertragen (über Verbindungsleitungen).

Die Basisstation BTS1 der Verkehrszelle Z1 stoppt die Synchronisationsregelung, durch die die Mobilstation MS mit der Basisstation BTS1 der Verkehrszelle synchronisiert wird, sobald die Basisstation BTS1 die Übergabeanforderung empfangen hat. Außerdem wird eine laufende Signalisierungsprozedur (LAPDm) abgeschlossen.

In einem fünften Schritt 36 sendet die Basisstation BTS2 der Zielzelle Z2 einen Übergabebefehl (HANDOVER-COMMAND) zur Mobilstation MS. Dieser Übergabebefehl ist eine sogenannte nichtnumerierte Information (UI-FRAME), durch die eine ungesicherte Signalisierungsverbindung 3 zwischen der Basisstation BTS2 der Zielzelle Z2 und der Mobilstation MS hergestellt wird. Die nichtnumerierte Information gehört zur Schicht 2 des bekannten OSI-Referenzmodells.

Empfängt die Mobilstation MS den Übergabebefehl, bedeutet das für sie, die Basisstation BTS2 der Zielzelle als neue Verkehrszelle zu betrachten. Die Mobilstation MS sendet daraufhin in einem sechsten Schritt 37 eine Zugangsnachricht (HANDOVER-ACCESS) zur Basisstation BTS2 der Zielzelle Z2. Nach dem Empfang der Zugangsnachricht durch die Basisstation BTS2 der Zielzelle Z2 wird die Übergabe der Funkverbindung 2 ausgeführt, d.h. im Festnetz (BSC, MSC) werden die Gespräche so übertragen, daß die Gespräche jetzt über die Basisstation BTS2, die Funkfeststationsteuereinrichtung BSC2 der Zielzelle Z2 und die Mobilfunkvermittlungseinrichtung MSC z.B. ins öffentliche Fernsprechnetz geleitet werden.

Anschließend wird eine gesicherte Signalisierungsverbindung hergestellt: Die Zielzelle Z2 ist jetzt die neue Verkehrszelle (Endzustand 38). Die Basisstation BTS1 der Verkehrszelle Z1 ist ab diesem Zeitpunkt an der Funkverbindung 2 nicht mehr beteiligt.

Bei diesem zellularen Funksystem wird das Trägerfrequenzpaar, mit dem die Gespräche übertragen werden, vor und nach der Übergabe der Funkverbindung 2 nicht geändert. Gespräche werden somit über Zellgrenzen hinweg mit dem Trägerfrequenzpaar übertragen, das bei allen Basisstation gleich ist.

In dem beschriebenen zellularen Funksystem bewegen sich üblicherweise mehrere Mobilstationen, die sich auch aufeinander zubewegen können. Bewegt sich in Fig.1 eine zweite Mobilstation, von der Zelle Z2 kommend, auf die Mobilstation MS in Zelle Z1 zu, ist das Übergabeverfahren so anzupassen, daß z.B. ein drittes Trägerfrequenzpaar, das ebenfalls für alle Basisstationen gleich ist, zur Verfügung gestellt wird. Es ist aber auch möglich, die Kanäle der bestehenden Trägerfrequenz richtungsabhängig aufzuteilen, z.B. jeder zweite Kanal für eine Bewegungsrichtung der Mobilstation.

Die Beschreibung der Erfindung erfolgte hier am Beispiel des Inter-BSC Handovers, bei dem die beiden Basisstationen BTS1, BTS2 die beiden Funkfeststationsteuereinrichtung BSC1, BSC2 und die Mobilfunkvermittlungseinrichtung MSC beteiligt sind. In entsprechender Weise erfolgt ein Intra-BSC Handover.

Bei dem beschriebenen Mobilfunksystem können die von den Funkfeststationsteuereinrichtungen BSC1, BSC2 ausgeführten Funktionen auch durch die Mobilfunkvermittlungseinrichtung MSC ausgeführt werden.

Es ist auch möglich, daß die auszuführenden Funktionen gemeinsam von den Funkfeststationsteuereinrichtungen BSC1, BSC2 und der Mobilfunkvermittlungseinrichtung MSC wahrgenommen werden.

Wie bereits erwähnt wurde, können bei diesem zellularen Funksystem mehrere Gesprächs- oder Datenverbindungen gleichzeitig übergeben werden, da ja pro Funkverbindung z.B. acht Kanäle bestehen können; z.B. der Sprachkanal des Zugführers oder der Datenkanal des Bordrechners. Es genügt somit, die Empfangsparameter eines Kanals zu bestimmen, da die restlichen Kanäle den gleichen Übertragungsbedingungen ausgesetzt sind.

**Patentansprüche**

1. Zellulares Funksystem

   - bei dem mehrere Funkfeststationsteuereinrichtungen (BSC1, BSC2) vorhanden sind, an die jeweils mindestens eine Funkfeststation (BTS1, BTS2) angeschlossen ist,

   - bei dem mindestens ein ortsbeweglicher Teilnehmer (MS) vorhanden ist, der eine Funkverbindung (2) mit der ihm zugeordneten Funkfeststation (BTS1) einer Verkehrszelle (Z1) hat,

   **dadurch gekennzeichnet**, daß

   - mindestens die Funkfeststation (BTS1) der Verkehrszelle (Z1) und die Funkfeststation (BTS2) einer benachbarten Zielzelle (Z2) einen gemeinsamen Takt haben,

   - die Funkfeststationen (BTS1, BTS2) mindestens eine gemeinsame Trägerfrequenz haben,

   - die Funkfeststation (BTS2) der Zielzelle (Z2) und die an die Funkfeststation (BTS2) der Zielzelle (Z2) angeschlossene Funkfeststationsteuereinrichtung (BSC1, BSC2) eine Übergabe der Funkverbindung (2) des ortsbeweglichen Teilnehmers (MS) von der Funkfeststation (BTS1) der Verkehrszelle (Z1) zur Funkfeststation (BTS2) der Zielzelle (Z2) dann einleiten und ausführen, wenn mindestens ein von der Funkfeststation (BTS2) der Zielzelle (Z2) gemessener Empfangsparameter von Funksignalen, die der ortsbewegliche Teilnehmer (MS) aussendet, einen festgelegte Mindestwert erreicht.

2. Zellulares Funksystem nach Anspruch 1, dadurch gekennzeichnet, daß

   - die Funkfeststationsteuereinrichtung (BSC1) der Verkehrszelle (Z1) vor der Übergabe der Funkverbindung (2) eine Übergabeanforderung zur Funkfeststation (BTS2) der Zielzelle (Z2) sendet und diese dadurch aktiviert,

   - die Funkfeststationsteuereinrichtung (BSC2) der Zielzelle (Z2) eine Übergabeanforderung zur Funkfeststationsteuereinrichtung (BSC1) der Verkehrszelle (Z1) sendet, wenn der von der aktivierten Funkfeststation (BTS2) der Zielzelle (Z2) bestimmte Empfangsparameter den festgelegten Mindestwert erreicht,

   - die Funkfeststation (BTS2) der Zielzelle (Z2) einen Übergabebefehl zum ortbeweglichen Teilnehmer (MS) sendet und dadurch die Übergabe der Funkverbindung (2) veranlaßt, und

- der ortsbewegliche Teilnehmer (MS) den Übergabebefehl dadurch bestätigt, in dem er eine Zugangsnachricht zur Funkfeststation (BTS2) der Zielzelle (Z2) sendet.

3. Zellulares Funksystem nach Anspruch 1, dadurch gekennzeichnet, daß ein Empfangsparameter die Empfangsfeldstärke (RXLEV) ist.

4. Zellulares Funksystem nach Anspruch 1, dadurch gekennzeichnet, daß ein Empfangsparameter die Empfangsqualität (RXQUAL) ist.

5. Zellulares Funksystem nach Anspruch 1, dadurch gekennzeichnet, daß ein weiterer ortbeweglicher Teilnehmer eine weitere Funkverbindung mit der Funkfeststation (BTS1) der Verkehrszelle (Z1) hat, und daß die Funkverbindungen im Zeitteilungszugriffsverfahren erfolgen.

6. Zellulares Funksystem nach Anspruch 5, dadurch gekennzeichnet, daß die Funkfeststationen (BTS1, BTS2) für jeden weiteren ortsbeweglichen Teilnehmer (MS) eine weitere für alle Basisstationen gleiche Trägerfrequenz haben.

7. Zellulares Funksystem nach Anspruch 1, dadurch gekennzeichnet, daß die Funkfeststationen (BTS1, BTS2) so ausgelegt sind, daß die für die Funkverbindung (2) verwendete Trägerfrequenz bei der Übergabe unverändert bleibt.

8. Verfahren zur Übergabe einer Funkverbindung (2) eines ortsbeweglichen Teilnehmers (MS), der sich in einem zellularen Funksystem bewegt, das mehrere Funkfeststationsteuereinrichtungen (BSC1, BSC2) mit jeweils mindestens einer daran angeschlossenen Funkfeststation (BTS1, BTS2) hat, und der diese Funkverbindung (2) mit der ihm zugeordneten Funkfeststation (BTS1) einer Verkehrszelle (Z1) hat,
**dadurch gekennzeichnet**, daß

- die Funkfeststation (BTS2) der Zielzelle (Z2) vor einer notwendig werdenden Übergabe der Funkverbindung (2) von der Funkfeststation (BTS1) der Verkehrszelle (Z1) zur Funkfeststation (BTS2) einer benachbarten Zielzelle (Z1) durch die Funkfeststationsteuereinrichtung (BSC1, BS2), an die die Funkfeststation (BTS1) der Verkehrszelle (Z1) angschlossen ist, aktiviert wird,

- die Übergabe der Funkverbindung (2) von der Funkfeststation (BTS2) der Zielzelle (Z2) und der an die Funkfeststation (BTS2) der Zielzelle (Z2) angeschlossenen Funkfeststationsteuereinrichtung (BSC1, BSC2) dann eingeleitet und ausgeführt wird, wenn mindestens ein Empfangsparameter von Funksignalen, die der ortsbewegliche Teilnehmer (MS) aussendet, einen festgelegten Mindestwert erreicht.

9. Verfahren nach Anspruch 8, dadurch gekennzeichnet, daß

- ausgehend von einem Ausgangszustand (31) das Aktivieren der Funkfeststation (BTS2) der Zielzelle (Z2) in einem ersten Schritt (32) erfolgt, in dem die Funkfeststationsteuereinrichtung (BSC1) der Verkehrszelle (Z1) eine erste Übergabeanforderung zur Funkfeststation (BTS2) der Zielzelle (Z2) sendet,

- in einem zweiten Schritt (33) die aktivierte Basisstation (BTS2) der Zielzelle (Z2) Empfangsparameter mißt,

- in einem dritten Schritt (34) die Basisstation (BTS2) der Zielzelle (Z2) die gemessenen Empfangsparameter mit den festgelegten Mindestwerten vergleicht,

- in einem vierten Schritt (35) die Funkfeststationsteuereinrichtung (BSC2) der Zielzelle (Z2) eine zweite Übergabeanforderung zur Funkfeststationsteuereinrichtung (BSC1) der Verkehrszelle (Z1) sendet, wenn die Empfangsparameter größer als die festgelegten Mindestwerte sind,

- in einem fünften Schritt (36) die Funkfeststation (BTS2) der Zielzelle (Z2) einen Übergabebefehl zum ortsbeweglichen Teilnehmer (MS) sendet,

- in einem sechsten Schritt (37) der ortsbeweglichen Teilnehmer (MS) eine Zugangsnachricht zur Funkfeststation (BTS2) der Zielzelle (Z2) sendet und dadurch einen Endzustand (38) herbeiführt, in dem die Zielzelle (Z2) die neue Verkehrszelle ist.

FIG.1

EP 0 699 011 A2

Funkverbindung besteht zwischen
BTS1 und MS.
Zelle Z1 ist Verkehrszelle — 31

BSC1 sendet HO_ Request
zur BSC2, BTS2
→ Aktivierung von BTS2 — 32

BTS 2 ermittelt Empfangsparameter — 33

Empfang gut     nein

34

ja

BSC 2 sendet HO_ Request
zur BSC1, BTS1 — 35

BTS2 sendet HO_ Command
zur MS — 36

MS sendet HO_ Access
zur BTS 2 — 37

FIG.2

Zelle Z2 (BTS2) ist neue Verkehrszelle — 38